**Europäisches Patentamt**

**European Patent Office**

**Office européen des brevets**

(19)

(11) Veröffentlichungsnummer: **0 195 989 B1**

(12) **EUROPÄISCHE PATENTSCHRIFT**

(45) Veröffentlichungstag der Patentschrift: **11.09.91**

(51) Int. Cl.5: **H04L 27/22**, H04H 1/00

(21) Anmeldenummer: **86103472.6**

(22) Anmeldetag: **14.03.86**

(54) **Verfahren zur Demodulation eines mit einer binären Bitfolge phasenmodulierten Eingangsignals und Schaltungsanordnung zum Durchführen des Verfahrens.**

(30) Priorität: **23.03.85 DE 3510562**

(43) Veröffentlichungstag der Anmeldung:
**01.10.86 Patentblatt 86/40**

(45) Bekanntmachung des Hinweises auf die
Patenterteilung:
**11.09.91 Patentblatt 91/37**

(84) Benannte Vertragsstaaten:
**DE FR GB IT SE**

(56) Entgegenhaltungen:
**FR-A- 1 383 789**
**US-A- 4 080 572**

(73) Patentinhaber: **Blaupunkt-Werke GmbH**
**Robert-Bosch-Strasse 200**
**W-3200 Hildesheim(DE)**

(72) Erfinder: **Hegeler, Wilhelm, Dipl.-Phys.**
**Grosse Venedig 23**
**W-3200 Hildesheim(DE)**

(74) Vertreter: **Eilers, Norbert, Dipl.-Phys.**
**Blaupunkt-Werke GmbH Robert-**
**Bosch-Strasse 200**
**W-3200 Hildesheim(DE)**

**Beschreibung**

Die Erfindung betrifft ein Verfahren zur Demodulation eines mit einer binären Bitfolge phasenmodulierten Eingangssignals der im Oberbegriff des Anspruchs 1 angegebenen Gattung.

Ein Beispiel eines solchen Eingangssignals ist das sog. RDS(Radio Data System-)Signal, mittels dessen von einem Rundfunksender sog. RDS-Informationen abgestrahlt werden, die Senderidentifikation, Programmtyp, alternierende Sendefrequenzen usw. betreffen. Zur Übertragung dieser RDS-Informationen wird senderseitig eine 1,1875-kHz-Rechteckschwinung mit einer die RDS-Information kennzeichnenden Bitfolge phasenmoduliert, wobei der Wechsel der Wertigkeit eines Bit von 0 nach 1 die Phase der Rechteckschwingung um 180° verschiebt und umgekehrt. Nach Tiefpaßfilterung der phasenmodulierten Rechteckschwingung wird das so entstehende PDS-Signal einem 57-kHz-Träger aufmoduliert und gegenüber einem sog. VRF-Träger, dessen Trägerfrequenz ebenfalls 57 kHz beträgt, um 90° phasenverschoben. In dem modulierten Signal wird der 57-kHz-Träger unterdrückt, und das entstehende Signal wird einem MPX-Signal hinzugefügt, das dann zu einem frequenzmodulierten Sendesignal verarbeitet wird.

Im Autoradio wird von dem FM-demodulierten Signal, also von einem wiedergewonnenen MPX-Signal, der additive Teil einem AM-Demodulator zugeführt, wie er z. B. in der Patentanmeldung P 34 33 392.7 vorgeschlagen ist. Dieser AM-Demodulator gewinnt aus dem additiven Teil des MPX-Signals das RDS-Signal, das als Eingangssignal dem hier vorgestellten Demodulationsverfahren unterzogen werden muß, um daraus die Bitfolge der RDS-Information zurückzugewinnen.

Der Erfindung liegt die Aufgabe zugrunde, ein Verfahren zur Demodulation von solchen Eingangssignalen anzugeben, mit welchem die binäre Bitfolge der RDS-Information mit ausreichender Störsicherheit reproduzierbar zurückgewonnen werden kann. Das Verfahren soll mittels einer technisch einfachen Schaltungsanordnung realisiert werden können.

Aus der französischen Patentschrift 1 383 789 ist bekannt, zur Demodulation der Phasenmodulation eines Trägers jeweils während einer Trägerperiode den Amplitudenwert des Trägers zu vier um 90° phasenverschoben Zeitpunkte abzutasten.

Die Aufgabe ist bei dem erfindungsgemäßen Verfahren durch die weiteren Merkmale im Kennzeichnungsteil des Anspruchs 1 gelöst.

Eine vorteilhafte Realisierung einer Schaltungsanordnung zur Durchführung des Verfahrens ergibt sich aus Anspruch 2.

Die Erfindung ist anhand eines in der Zeichnung dargestellten Ausführungsbeispiels einer Schaltungsanordnung zur Demodulation eines RDS-Signals im folgenden näher beschrieben.

Es zeigen:

Fig. 1     ein Schaltbild einer Schaltungsanordnung zur Demodulation eines RDS-Signals,

Fig. 2     eine schematische Darstellung des zeitlichen Verlaufs verschiedener Signale und Impulsfolgen in der Schaltungsanordnung in Fig. 1, und zwar in der Reihenfolge von a - f: eine 1,1875 kHz-Rechteckschwingung für das RDS-Signal, eine Bitfolge einer RDS-Information, ein aus der mit der Bitfolge phasenmodulierten Rechteckschwingung nach Tiefpaßfilterung entstandenes, idealisiertes RDS-Signal, eine in einem Frequenzgenerator der Schaltungsanordnung erzeugte Rechteckimpulsfolge, eine dazu phasenstarre Taktimpulsfolge doppelter Frequenz und die invertierte Taktimpulsfolge,

Fig. 3     einen Ausschnitt der Schaltungsanordnung in Fig. 1 mit einem modifizierten Schaltungsdetail.

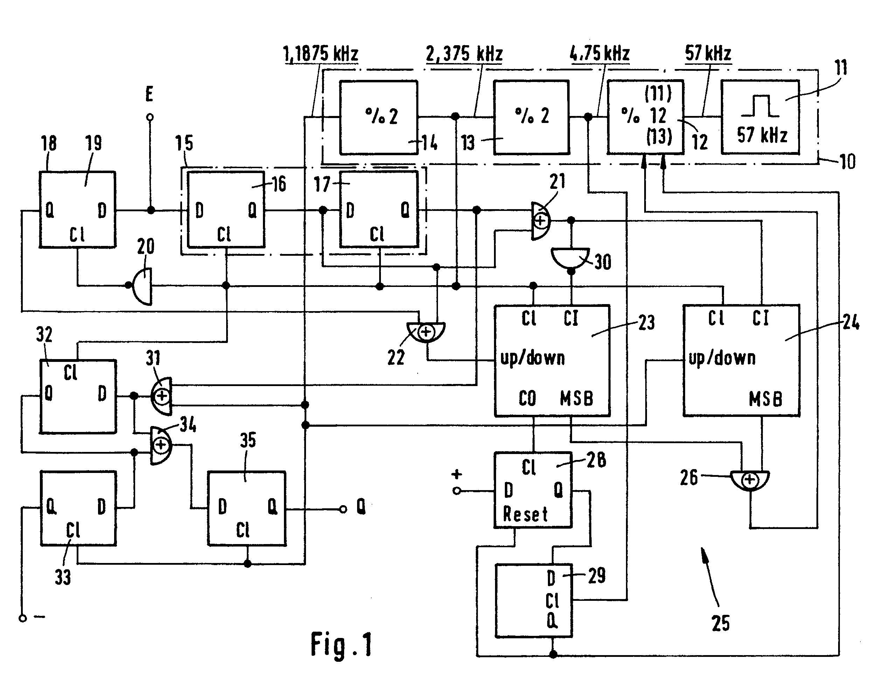

Mit der in Fig. 1 dargestellten Schaltungsanordnung wird folgendes Demodulationsverfahren realisiert:

Das Eingangssignal, im vorliegenden Fall das RDS-Signal, das wie eingangs beschrieben mittels eines AM-Demodulators aus einem MPX-Signal zurückgewonnen worden ist, wird in einem sich fortlaufend wiederholenden Abtastzyklus jeweils viermal abgetastet. Die Abtastzeitpunkte jedes Abtastzyklus werden mittels einer mit dem Eingangssignal synchronisierten Rechteckimpulsfolge so festgelegt, daß die Abtastwerte immer um eine Viertelperiode der Periode des Eingangssignals zueinander phasenverschoben sind. Durch entsprechende Synchronisation der Abtastfrequenz mit der Trägerschwingung des Eingangssignals liegt somit innerhalb eines jeden Abtastzyklus der erste und der dritte Abtastwert in etwa in einer Nullstelle des Eingangssignals und der zweite und vierte Abtastwert etwa in einem Extrempunkt des Eingangssignals.

Die aufeinanderfolgenden geradzahligen Abtastwerte aller Abtastzyklen werden jeweils miteinander verglichen. Bei Ungleichheit der Vergleichswerte wird jeweils der dazwischenliegerde ungeradzahlige Abtastwert mit dem nachfolgenden oder vorausgehenden geradzahligen Abtastwert, also mit einem der Vergleichswerte, auf Parität geprüft. Alle Prüfergebnisse werden unter Berücksichtigung ihres Vorzeichens entsprechend aufsummiert und daraus ein Synchronisiersignal für die Rechteckimpulsfolge abgeleitet. Bei Gleichheit der beiden Vergleichswerte wird geprüft, ob die beiden Vergleichswerte, also die beiden momentan verglichenen geradzahligen Abtastwerte, dem gleichen Abtastzyklus oder aufeinanderfolgenden Abtastzyklen angehören. Im letzten Fall ist die Bitgrenze bezüglich der Rechteckimpulsfolge richtig. Im ersten Fall ist die Bitgrenze bezüglich der Rechteckimpulsfolge um 180° verschoben. Die Häufigkeit der Prüfergebnisse, die eine Zugehörigkeit der jeweils verglichenen geradzahligen Abtastwerte zu dem gleichen Abtastzyklus zeigen, wird erfaßt, und wenn diese einen Vorgabewert überschreitet, wird die Rechteckimpulsfolge gegenüber dem Eingangssignal um 180° in der Phase verschoben. Bei der so mit dem Eingangssignal synchronisierten Rechteckimpulsfolge wird aus den geradzahligen Abtastwerten die Bitfolge der RDS-Information zurückgewonnen. Dies kann vorteilhaft dadurch erfolgen, daß die geradzahligen Abtastwerte jedes Abtastzyklus fortlaufend mit der Rechteckimpulsfolge bezüglich ihrer Polarität verglichen und jeweils eines der beiden Vergleichsergebnisse als Einzelbit der Bitfolge ausgegeben wird. Um eine hierbei sich ergebende Redundanz zu vermeiden, ist es auch möglich, die Bitfolge dadurch zu gewinnen, daß aus jedem Abtastzyklus jeweils ein Abtastwert entnommen, wobei das Entnahmeintervall gleich der Frequenz der Rechteckimpulsfolge festgelegt wird, und dieser unmittelbar als Einzelbit der Bitfolge ausgegeben wird.

Um die Qualität der als richtig erkannten Bitfolge der RDS-Information zu bewerten, wird parallel zu jedem Einzelbit noch ein Qualitätsbit bestimmt, das durch seine Wertigkeit 1 oder 0 angibt, ob das Einzelbit richtig erkannt ist oder nicht. Hierzu werden in dem zuerst angesprochenen Fall der Bitfolgen-Rückgewinnung die einem Abtastzyklus zugehörigen beiden Vergleichsergebnisse miteinander verglichen und das erneute Vergleichsergebnis als Qualitätsbit ausgegeben. Im zweiten Fall der Bitfolgengewinnung werden jeweils die Ergebnisse aus dem Vergleich der dem gleichen Abtastzyklus zugehörigen geradzahligen Abtastwerte unmittelbar als Qualitätsbits ausgegeben.

Zur Erhöhung der Störsicherheit des Demodulationsverfahrens wird nach einer weiteren Variante die Bitfolge der RDS-Information dadurch erhalten, daß von den geradzahligen Abtastwerten eines jeden Abtastzyklus die Differenz gebildet und deren Signum als Einzelbit der Bitfolge ausgegeben wird. Während in den beiden vorstehend genannten Fällen es ausreichend ist, für die Abtastwerte nur ein Bit zu verwenden, ist es in letzterem Fall erforderlich, die Abtastwerte mit einer Wertigkeit von mehr als 1 Bit zu erfassen.

Die in Fig. 1 dargestellte Schaltungsanordnung zur Durchführung des Demodulationsverfahrens weist einen steuerbaren Frequenzgenerator 10 auf, der eine Rechteckimpulsfolge mit einer der Trägerfrequenz im RDS-Signal entsprechenden Impulsfolgefrequenz von 1,1875 kHz und eine dazu phasenstarre Taktimpulsfolge mit einer dem Zweifachen der Impulfolgefrequenz entsprechenden Taktfrequenz von 2,375 kHz erzeugt. Hierzu weist der Frequenzgenerator 10 einen 57 kHz-Rechteckgenerator 11, einen ersten Frequenzteiler 12 mit steuerbarem Teilerverhältnis und einen dritten und vierten Frequenzteiler 13, 14 mit jeweils dem Teilerverhältnis "2" auf. Die Frequenzteiler 12 - 14 sind in Reihe geschaltet. Das Teilerverhältnis des ersten Frequenzteilers 12 ist je nach der an seinen beiden Steuereingängen anliegenden Bitkombination von "12" (Bitkombination 1/0 oder 0/0) auf "11" (Bitkombination 1/1) oder "13" (Bitkombination 0/1) änderbar.

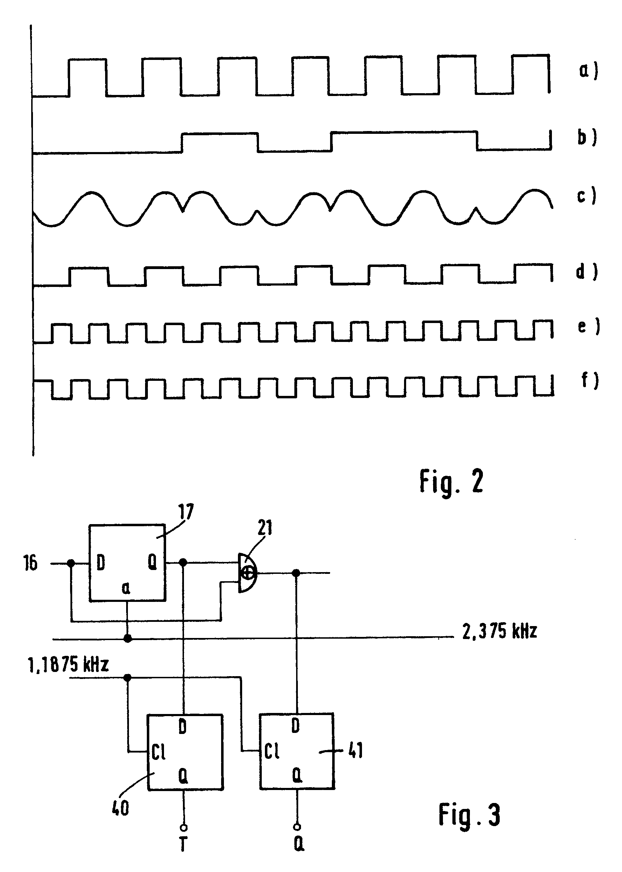

Die Schaltungsanordnung weist ferner ein 2 Bit-Schieberegister 15, bestehend aus zwei hintereinandergeschalteten flankengetriggerten D-Flip-Flops 16, 17 und ein 1 Bit-Schieberegister 18, bestehend aus einem flankengetriggerten D-Flip-Flop 19, auf. Das 2 Bit-Schieberegister 15 wird von der Taktimpulsfolge, wie sie in Fig. 2e dargestellt ist, mit der Frequenz von 2,375 kHz und das 1 Bit-Schieberegister 18 von der mittels des Inverters 20 invertierten Taktimpulsfolge, wie sie in Fig. 2f dargestellt ist, getriggert, und zwar jeweils mit der Flanke der Taktimpulse. Die am Ausgang des Frequenzgenerators 10 abgenommenen Rechteckimpulsfolge mit der Impulsfolgefrequenz von 1,1875 kHz ist in Fig. 2d dargestellt.

Die Eingänge der beiden Schieberegister 15, 18, also einerseits der D-Eingang des D-Flip-Flops 16 und andererseits der D-Eingang des D-Flip-Flops 19, sind an dem Eingang E der Schaltungsanordnung angeschlossen. Die beiden Bitausgänge des 2 Bit-Schieberegisters 15, also die Q-Ausgänge der beiden D-Flip-Flops 15, 16, sind mit einem ersten Komparator in Form eines ersten Exclusiv-Oder-Gliedes 21, im folgenden kurz EX/OR-Glied 21 genannt, verbunden. Der erste Bitausgang des 2 Bit-Schieberegisters, also der Q-Ausgang des D-Flip-Flops 16, und der Ausgang des 1 Bit-Schieberegisters 18, also der Q-Ausgang des D-Flip-Flops 19, sind an den beiden Eingängen eines zweiten Komparators in Form eines zweiten EX/OR-Gliedes 22 angeschlossen. Der Ausgang des ersten Ex/OR-Gliedes 21 ist über einen Inverter 30 mit dem Übertrag-Eingang CI eines ersten up/down-Zählers 23 und unmittelbar mit dem Übertrag-Eingang CI eines zweiten up/down-Zählers 24 verbunden. An dem Zählrichtungseingang up/down des ersten Zählers 23 ist der Ausgang des zweiten EX/OR-Gliedes 22 angeschlossen, während der Zählrichtungseingang up/down des zweiten Zählers 24 mit der Rechteckimpulsfolge der Frequenz 1,1875 kHz (Fig. 2d) belegt ist. Die beiden up/down-Zähler 23, 24, an deren Takteingang C1 jeweils die Taktimpulsfolge liegt, werden in Abhängigkeit von den Signalen an ihren Zählrichtungseingängen up/down durch die Ausgangssignale des ersten EX/OR-Gliedes 21 inkrementiert bzw. dekrementiert, und zwar beide Zähler 23, 24 getrennt je nach Wertigkeit der Ausgangssignale. Aus den beiden Ergebnissen dieser Inkrementation und Dekrementation in jedem Zähler 23, 24 wird in einer Synchronisierschaltung 25 ein zeitbegrenztes Steuersignal für den steuerbaren Frequenzteiler 12 generiert, das aus einer 2 Bit-Kombination besteht. Dieses Steuersignal verändert kurzzeitig das Teilerverhältnis des ersten Frequenzteilers 12 in eine solche Richtung, daß eine verbesserte Synchronisation zwischen der Rechteckimpulsfolge (Fig. 2d), und damit der Taktimpulsfolge (Fig. 2e) und der invertierten Taktimpulsfolge (Fig. 2f), und dem Eingangssignal herbeigeführt wird.

Die Synchronisierschaltung 25 weist ein drittes EX/OR-Glied 26 auf, das eingangsseitig an den beiden MSB-Ausgängen der beiden Zähler 23, 24 angeschlossen und ausgangsseitig mit dem einen Steuereingang des ersten Frequenzteilers 12 verbunden ist. Der erste Zähler 23 weist eine Überlaufsperre auf. Beim Überlauf tritt an dem Überlauf-Ausgang CO des ersten Zählers 23 ein Carry-Impuls auf, der den Zähler 23 um ein Viertel seines Zählbereichs zurücksetzt, so daß sich sein MSB nicht ändert. Gleichzeitig liegt der Carry-Impuls an dem Takteingang C1 eines D-Flip-Flops 28 an, dessen D-Eingang mit dem positiven Betriebspotential (+) verbunden ist und dessen Q-Ausgang an dem D-Eingang eines nachfolgenden D-Flip-Flops 29 angeschlossen ist. Das mit der doppelten Taktfrequenz, also mit 4,75 kHz, getaktete D-Flip-Flop 29 ist mit seinem Q-Ausgang einerseits mit dem anderen Steuereingang des Frequenzteilers 12 und andererseits mit dem Reset-Eingang des D-Flip-Flops 28 verbunden. Zum Rücksetzen des D-Flip-Flops 28 kann aber auch der $\overline{Q}$-Ausgang des D-Flip-Flops 29 mit dem negierten Reset-Eingang verbunden werden. Die beiden D-Flip-Flops 28, 29 bilden ein Torglied der Synchronisierschaltung 25, an dem nach Auftreten eines Carry-Impulses am Überlaufausgang CO des Zählers 23 ein die Umschaltung des Teilerverhältnisses des Frequenzteilers 12 freigebendes logisch 1-Signal für die Dauer einer 4,75 kHz-Periode ansteht.

Der zweite Bitausgang des 2 Bit-Schieberegisters 15, also der Q-Ausgang des D-Flip-Flops 17, ist mit dem Eingang eines weiteren Komparators, hier wiederum als EX/OR-Glied 31 ausgebildet, verbunden, dessen anderer Eingang mit der Rechteckimpulsfolge von 1,1875 kHz (Fig. 2d) belegt ist. Der Ausgang des EX/OR-Gliedes 31 ist mit einem mit der Taktfrequenz 2,375 kHz getakteten D-Flip-Flop 32 verbunden, dem ein weiteres, mit der Rechteckimpulsfolge von 1,1875 kHz getaktetes D-Flip-Flop 33 nachgeschaltet ist. Am Q-Ausgang des D-Flip-Flops 33 ist die Bitfolge mit der Wertigkeit T der Einzelbits abnehmbar. Der Ausgang des EX/OR-Gliedes 31 und der Q-Ausgang des D-Flip-Flops 32 sind mit einem weiteren EX/OR-Gliedes 34 verbunden, dessen Ausgang an dem D-Eingang eines mit der Rechteckimpulsfolge von 1,1875 kHz getakteten D-Flip-Flops 35 angeschlossen ist. Am Q-Ausgang des D-Flip-Flops 35 ist eine Qualitätsaussage mit der Wertigkeit Q der Qualitätsbits über die rückgewonnene Bitfolge abnehmbar.

Die Wirkungsweise der beschriebenen Schaltungsanordnung ist wie folgt:

Der Schaltungsanordnung wird das digitalisierte Eingangssignal R(t) zugeführt. Ein Beispiel für einen Verlauf des Eingangssignals ist schematisch in Fig. 2c dargestellt. Dieses RDS-Signal wird gewonnen aus der Phasenmodulation der Rechteckschwingung in Fig. 2a mit der in Fig. 2b beispielsweise dargestellten Bitfolge. Das Bitraster der Bitfolge ist gleich der Periode der Rechteckschwingung, nämlich 1,1875 kHz. Jede Änderung der Wertigkeit der Einzelbits bewirkt eine Phasenverschiebung der Rechteckschwingung um 180°. Nach Tiefpaßfilterung erhält man den in Fig. 2c idealisiert dargestellten Verlauf des RDS-Signals, das gleichungsmäßig ausgedrückt werden kann zu

$$R(t) = R_o \sin (2\pi \cdot 1,1875 \text{ kHz} \cdot t + T \cdot \pi),$$

mit T = 0;1.

Dieses RDS-Signal liegt nach Tiefpaßfilterung und Unterabtastung, z.B. in 4 Samples pro Periode, an dem Eingang E der Schaltungsanordnung. Zweckmäßigerweise sind die Digitalwerte geclipt, so daß am Eingang E nur die Digitalwerte "0" und "1" auftreten.

Mit jeder Flanke der Taktimpulsfolge von 2,375 kHz (Fig. 2e) wird in das D-Flip-Flop 16 ein Abtastwert eingeschrieben, der mit der nächsten Flanke der Abtastimpulsfolge in das D-Flip-Flop 17 weitergeschoben wird. Mit jeder Flanke der invertierten Taktimpulsfolge von 2,375 kHz (Fig. 2f) wird ein Abtastwert in das D-Flip-Flop 19 eingeschrieben. Alle Abtastwerte liegen um eine Viertelperiode phasenverschoben zueinander. Bei richtiger oder um 180° falscher Phasenlage des RDS-Signals und der Rechteckimpulsfolge und damit der Abtastimpulsfolgen stellen die Abtastwerte in dem D-Flip-Flop 19 Nullstellen des RDS-signals und die Abtastwerte in den D-Flip-Flops 16, 17 Extremwerte des RDS-Signals dar. Die im D-Flip-Flop 19 enthaltenen Abtastwerte werden im folgenden ungeradzahlige Abtastwerte und die in den D-Flip-Flops 16, 17 enthaltenen Abtastwerte werden im folgenden geradzahlige Abtastwerte genannt.

Im ersten EX-OR-Glied 21 werden die jeweils in den D-Flip-Flops 16, 17 enthaltenen geradzahligen Abtastwerte miteinander verglichen. Sind die Abtastwerte ungleich, so ist der dazwischenliegende ungeradzahlige Abtastwert charakteristisch für einen Nulldurchgang des Eingangssignals und kann zur Phasenkorrektur der 1,1875 kHz-Rechteckimpulsfolge herangezogen werden. Das dann am Ausgang des EX/OR-Glieds 21 anstehende logisch 1-Signal gelangt über den Inverter 30 als logisch O-Signal an den Carry- oder Übertrag-Eingang CI des ersten Zählers 23, wodurch dieser mit jedem Clock um 1 inkrementiert oder dekrementiert wird, je nach Wertigkeit des an seinem Zählrichtungseingang up/down liegenden Signals. Im zweiten EX/OR-Glied 22 wird der zwischen den momentan verglichenen geradzahligen Abtastwerten, den Vergleichswerten, liegende ungeradzahlige Abtastwert mit dem in der Reihenfolge der Abtastung nachfolgenden geradzahligen Abtastwert auf Parität geprüft. Sind beide Abtastwerte gleich, so liegt am Ausgang des EX/OR-Gliedes 22 ein logisch O-Signal und der Zähler 23 zählt abwärts. Bei Ungleichheit der beiden dem EX/OR-Glied 22 zugeführten Abtastwerte ist das Ausgangssignal des EX/OR-Glieds 22 logisch 1 und der Zähler 23 zählt aufwärts. Mit jedem für die Ungleichheit der beiden Vergleichswerte, d.h. der beiden zu vergleichenden geradzahligen Abtastwerte, charakteristischen Ausgangssignal des EX/OR-Gliedes 21 wird somit der Zähler 23 inkrementiert (logisch 1 am Zählrichtungseingang) oder dekrementiert (logisch O am Zählrichtungseingang). Sobald der 8 Bit-Zähler 23 die Grenze seines Zählbereichs erreicht hat, erscheint am Übertrag- oder Carry-Ausgang CO ein Carry-Impuls. Damit wird gleichzeitig der Zähler 23 um ein Viertel seines Zählbereiches zurückgesetzt, wobei sich das MSB nicht ändert. Der Carry-Impuls bewirkt am Q-Ausgang des D-Flip-Flops 29 einen Torimpuls logisch 1 für die Dauer einer 4,75 kHz-Periode, und entsprechend dem MSB (logisch O oder logisch 1) am Ausgang des Zählers 23 wird für diese Zeit das Teilerverhältnis des Frequenzteilers 12 von "12" auf "13" (Bitkombination O/1) oder "11" (Bitkombination 1/1) geändert. Das bewirkt die Verschiebung der Rechteckimpulsfolge um eine 57 kHz-Periode. Die Häufigkeit des Auftretens des Carry-Impulses bestimmt die Häufigkeit der Variation des Teilerverhältnisses im Frequenzteiler 12. Damit kann die Rechteckimpulsfolge auf das Eingangssignal einrasten, allerdings um 180° unbestimmt. Mit Auftreten des Torimpulses am Q-Ausgang des D-Flip-Flops 29 wird das D-Flip-Flop 28 zurückgesetzt.

Sind die beiden im EX/OR-Glied 21 miteinander zu vergleichenden, momentan in den D-Flip-Flops 16, 17 enthaltenen Abtastwerte gleich, so ist das Ausgangssignal des EX/OR-Gliedes 21 logisch O. Damit wird der Carry-Eingang des zweiten Zählers 24 aktiviert und der Zähler 24 mit jeder Flanke der Taktimpulsfolge von 2,375 kHz inkrementiert bzw. dekrementiert, je nach Steuersignal am Zählrichtungseingang up/down. Mit der am Zählrichtungseingang anliegenden Rechteckimpulsfolge von 1,1875 kHz wird geprüft, ob die beiden gleichen geradzahligen Abtastwerte dem gleichen Abtastzyklus oder verschiedenen, unmittelbar aufeinanderfolgenden Abtastzyklen angehören. Gleichheit der Abtastwerte bedeutet ein Wechsel der Wertigkeit zwischen zwei aufeinanderfolgenden Bits der RDS-Information. Im ersten Fall liegt die Bitgrenze innerhalb einer Periode des RDS-Signals und damit um 180° falsch. Bei falscher Lage der Bitgrenze hat die Rechteckimpulsfolge am Zählrichtungseingang up/down des Zählers 24 bei Auftreten eines Ausgangssignals logisch O am Carry-Eingang CI des Zählers 24 die Wertigkeit logisch 1. Der Zähler 24 wird mit jedem Clock inkrementiert. Im zweiten Fall liegt die Bitgrenze am Ende einer RDS-Periode und damit richtig. Bei Auftreten eines logisch O-Signals am Carry-Eingang CI des Zählers 24 weist dessen Zählrichtungseingang jeweils logisch O auf. Der Zähler 24 wird mit jedem Clock dekrementiert. Der Zähler 24 hat ebenfalls eine Überlaufsperre. Liegt die Bitgrenze um 180° falsch, so wird irgendwann das MSB des zweiten Zählers 24 über das EX/OR-Glied 26 das MSB des ersten Zählers 23 invertieren und damit das Teilerverhältnis im Frequenzteiler 12 entgegengesetzt verändern, so daß aus der stabilen Phasenlage eine labile wird und die Phase nach irgendeiner Richtung wegläuft. Wenn 90° Phasenverschiebung überschritten sind, überwiegen die Gleichheitssignale am Ausgang des EX/OR-Gliedes 21, bei welchen die Bitgrenze richtig liegt, wodurch der zweite Zähler 24 wieder dekrementiert wird und zurückläuft und die Rechteckimpulsfolge durch das MSB des ersten Zählers 23 wieder phasenrichtig synchronisiert wird.

Bei richtiger Phasenlage von RDS-Signal und Rechteckimpulsfolge wird zweimal pro RDS-Periode entschieden, ob die geradzahligen Abtastwerte mit der 1,1875 kHz-Rechteckimpulsfolge in der Polarität übereinstimmen. Hierzu wird mittels des EX/OR-Gliedes 31 der jeweils in dem D-Flip-Flop 35 enthaltene geradzahlige Abtastwert mit der Rechteckimpulsfolge verglichen, und zwar zweimal innerhalb einer Rechteckimpulsfolge-Periode. Das zweite dieser Vergleichsergebnisse wird mit dem Bitraster 1,1875 kHz am Q-Ausgang des D-Flip-Flops 33 als Bit-Wertigkeit T ausgegeben. Die beiden Vergleichsergebnisse innerhalb jeder Rechteckimpulsfolge-Periode werden mittels des EX/OR-Gliedes 34 miteinander verglichen. Das Vergleichsergebnis wird ebenfalls mit dem Bitraster am Q-Ausgang des D-Flip-Flops 35 ausgegeben und stellt als Qualitätsbit eine Qualitätsaussage für die Güte der richtig erkannten Bit-Wertigkeit am Q-Ausgang des D-Flip-Flops 33 dar.

Bei der vorstehend beschriebenen Schaltungsanordnung kann bei Gleichheit der geradzahligen Abtastwerte (Ausgangssignal des EX/OR-Gliedes 21 logisch O), der dazwischenliegende geradzahlige Abtastwert ebenso gut mit dem in der Abtastfolge vorausgehenden geradzahligen Abtastwert auf Parität geprüft werden. Hierzu ist lediglich der eine Eingang des EX/OR-Gliedes 22 nicht mit dem Q-Ausgang des D-Flip-Flops 16, sondern mit dem Q-Ausgang des D-Flip-Flops 17 zu verbinden und zwischen dem Ausgang des EX/OR-Gliedes 22 und dem Zählrichtungseingang up/down des Zählers 23 ein Inverter einzuschalten. Ebenso könnte der eine Eingang des EX/OR-Gliedes 31 anstatt mit dem Q-Ausgang des D-Flip-Flops 17 mit dem Q-Ausgang des D-Flip-Flops 16 verbunden werden.

Die in Fig. 3 ausschnittweise zu sehende Schaltungsanordnung gemäß Fig. 1 ist bezüglich der Rückgewinnung der Bitfolge und der Erzeugung der zugeordneten Qualitätsbits gegenüber der Schaltungsanordnung in Fig. 1 modifiziert. Dabei entfallen in Fig. 1 die Bauelemente mit den Bezugszeichen 31 - 35. An ihrer Stelle treten in Fig. 3 die beiden D-Flip-Flops 40 und 41. Im übrigen ist der Schaltungsaufbau dieser modifizierten Schaltungsanordnung identisch mit dem Schaltungsaufbau in Fig. 1. Der D-Ausgang des D-Flip-Flops 40 ist mit dem Q-Ausgang des D-Flip-Flops 17 in Fig. 1 verbunden, während der D-Eingang des D-Flip-Flops 41 an dem Ausgang des EX/OR-Gliedes 21 in Fig. 1 angeschlossen ist. Beide D-Flip-Flops 40, 41 werden mit der Rechteckimpulsfolge von 1,1875 kHz getaktet. Am Q-Ausgang des D-Flip-Flops 40 ist die Bitwertigkeit T der zurückgewonnenen Bitfolge abnehmbar, während am Q-Ausgang des D-Flip-Flops 41 die Qualitätsbits erscheinen. Mit dieser Schaltungsvariante wird die in der entsprechenden Schaltungsausführung in Fig. 1 enthaltene Redundanz vermieden. Durch das D-Flip-Flop 40 wird die Bitfolge aus geradzahligen Abtastwerten zusammengesetzt, wobei jeder Abtastwert einem der aufeinanderfolgenden Abtastzyklen entnommen ist. Das Entnahmeintervall wird durch die Rechteckimpulsfolge bestimmt. Durch das D-Flip-Flop 41 wird der Ausgang des EX/OR-Gliedes 21 immer dann abgetastet, wenn zwei geradzahlige Abtastwerte desselben Abtastzyklus an den Eingängen des EX/OR-Gliedes 21 anliegen und miteinander verglichen werden. Sind diese ungleich, so kann dem zu diesem Zeitpunkt am Q-Ausgang des Flip-Flops 17 abgenommenen Einzelbit für die Bitfolge die Qualität "gut" zugeordnet werden. Am Q-Ausgang des D-Flip-Flops 41 erscheint das Qualitätsbit logisch 1.

Bei der beschriebenen Schaltungsanordnung ist es auch möglich, für die Abtastwerte mehr als 1 Bit zu verwenden. Für die Rückgewinnung der Bitfolge wird dann jeweils die Differenz der einem Abtastzyklus zugehörigen geradzahligen Abtastwerte gebildet und das Signum dieser Differenz als Einzelbit der Bitfolge ausgegeben. Damit erhöht sich die Störsicherheit um nahezu 6 dB. Allerdings ist damit ein erhöhter Schaltungsaufwand verbunden, da einerseits die D-Flip-Flops 16,17 jeweils als Mehrbit-Register ausgebildet werden müssen und außerdem eine Subtrahierschaltung erforderlich ist, welche die Differenz der beiden geradzahligen Abtastwerte pro Abtastzyklus bildet. Auch könnte an dem Eingang E der Schaltungsanordnung eine höhere Samplefrequenz gelegt werden, z.B. 12 RDS-Samples pro RDS-Periode. Auch hier erhöht sich natürlich der Schaltungsaufwand.

**Patentansprüche**

1. Verfahren zur Phasenregelung in einem Demodulator für ein mit einer binären Bitfolge phasenmoduliertes Eingangssignal, in welchem das Bitraster gleich der Periode der Trägerschwingung ist, und eine Bitänderung durch eine 180-Grad-Phasenverschiebung der Trägerschwingung charakterisiert ist, und bei dem das Eingangssignal in einem sich fortlaufend wiederholenden Abtastzyklus jeweils viermal abgetastet wird, wobei der Abtastzeitpunkt jedes Abtastzyklus mittels einer mit dem Eingangssignal synchronisierten Rechteck-Impulsfolge so geregelt werden, daß die Abtastwerte jeweils ein Viertel der Periode des Eingangssignals zueinander phasenverschoben sind, dadurch gekennzeichnet, daß der erste Abtastwert in etwa in einer Null-Stelle des Eingangssignals liegt, daß je zwei aufeinanderfolgende geradzahlige Abtastwerte aller Abtastzyklen miteinander verglichen werden,

   - daß bei Ungleichheit der Vergleichswerte der dazwischenliegende ungeradzahlige Abtastwert mit dem in der Abtastfolge jeweils nachfolgenden oder vorausgehenden Vergleichswert auf Parität geprüft wird, die Prüfergebnisse entsprechend ihrer Parität addiert oder subtrahiert werden und aus der Summe ein Synchronisier-Signal für die Rechteck-Impulse abgeleitet wird

   - und daß bei Gleichheit der Vergleichswerte jeweils deren Abtastzyklen-Zugehörigkeit bestimmt und eine Phasenverschiebung der Rechteck-Impulsfolge um 180 Grad dann durchgeführt wird, wenn die Häufigkeit der die Abtastzyklus-Identität ausweisenden Zugehörigkeitsbestimmung einen Vorgabewert überschreitet.

2.  Verfahren nach Anspruch 1,
    dadurch gekennzeichnet,
    daß zur Zurückgewinnung der Bitfolge die geradzahligen Abtastwerte jedes Abtastzyklus
    fortlaufend mit der Rechteckimpulsfolge bezüglich ihrer Polarität verglichen und jeweils
    eines der beiden Vergleichsergebnisse als Einzelbit der Bitfolge ausgegeben wird.

3.  Verfahren nach Anspruch 1,
    dadurch gekennzeichnet,
    daß die Bitfolge aus geradzahligen Abtastwerten zusammengesetzt wird, die jeweils einem
    der aufeinanderfolgenden Abtastzyklen mit
    gleichem Entnahmeintervall entnommen werden.

4.  Schaltungsanordnung zur Durchführung des
    Verfahrens nach Anspruch 1 mit einem steuerbarer Frequenzgenerator (1O), der eine Rechteckimpulsfolge mit einer der Trägerfrequenz
    im Eingangssignal entsprechenden Impulsfolgefrequenz und eine dazu phasenstarre Taktimpulsfolge mit einer dem Zweifachen der Im-
    pulsfolgefrequenz entsprechenden Taktfre-
    quenz erzeugt,
    dadurch gekennzeichnet,
    daß das digitalisierte Eingangssignal sowohl an
    dem Eingang eines mit der Taktimpulsfolge
    getakteten 2-Bit-Schieberegisters (15) mit zwei
    parallelen Ausgängen als auch an dem Eingang eines mit der invertierten Taktimpulsfolge
    getakteten 1-Bit-Schieberegisters (18) liegt,
    daß die beiden Bitausgänge des 2-Bit-Schieberegisters (15) mit einem ersten Komparator
    (21) und ein Bitausgang des 2-Bit-Schieberegisters (15) und der Ausgang des 1-Bit-Schieberegisters (18) mit einem zweiten Komparator
    (22) verbunden ist, daß mit dem Ausgang des
    ersten Komparators (12) ein erster und zweiter
    Zähler (23, 24) derart verbunden sind, daß ein
    für die Ungleichheit der Komparatoreingangssignale charakteristisches Ungleichheitssignal
    am Komparatorausgang dem ersten Zähler
    (23) und ein für die Gleichheit der Komparator-
    eingangssignale charakteristisches Gleichheits-
    signal am Komparatorausgang dem zweiten
    Zähler (24) zugeführt ist, daß die beiden Zähler (23, 24) derart ausgebildet sind, daß das
    jeweilige Ausgangssignal des Komparators (21)
    den ersten Zähler (23) in Abhängigkeit vom
    Ausgangssignal des zweiten Komparators (22)
    und den zweiten Zähler (24) in Abhängigkeit
    von der momentanen Polarität der Rechteck-
    impulsfolge jeweils inkrementiert oder dekre-
    mentiert, daß an den Ausgängen der beiden
    Zähler (23, 24) eine mit den Steuereingängen
    des Frequenzgenerators (10) verbundene Schronisierschaltung (25) angeschlossen ist,
die aus den Ausgangssignalen der Zähler (23,
24) ein zeitbegrenztes Steuersignal zum Synchronisieren der Rechteckimpulsfolge mit dem
Eingangssignal erzeugt, daß die Komparatoren
als Exclusiv-Oder-Glieder (21, 22) und die
Zähler (23, 24) als von der Taktimpulsfolge
getaktete up/down-Zähler (23, 24) ausgebildet
sind,
daß der Übertrageingang (CI) des zweiten Zählers (24) unmittelbar und der des ersten Zählers 23 über einen Inverter (30) mit dem Ausgang des ersten Exclusiv-Oder-Gliedes (21)
verbunden sind,
daß der Zählrichtungseingang (up/down) des
zweiten Zählers (24) mit der Rechteckimpulsfolge belegt ist und der des ersten Zählers
(23) an dem Ausgang des zweiten Exclusiv-
Oder-Gliedes (22) angeschlossen ist,
und daß der erste Zähler (23) eine Überlaufsperre aufweist, deren Überlaufimpuls den ersten Zähler (23) um einen vorgebbaren Teil
seines Zählbereiches, vorzugsweise um ein
Viertel seines Zählbereiches, zurücksetzt.

5.  Schaltungsanordnung nach Anspruch 4,
    dadurch gekennzeichnet,
    daß ein dritter Komparator (31) eingangsseitig
    einerseits mit einem Bitausgang des 2-Bit-
    Schieberegisters (15) verbunden und andererseits mit der Rechteckimpulsfolge belegt ist
    und daß am Komparatorausgang die Bitfolge
    abnehmbar ist.

6.  Schaltungsanordnung nach Anspruch 5,
    dadurch gekennzeichnet,
    daß der dritte Komparator ein Exclusiv-Oder-
    Glied (31) aufweist das eingangsseitig einerseits mit einem Bitausgang des 2-Bit-Schieberegisters (15) verbunden und andererseits mit
    der Rechteckimpulsfolge belegt ist, daß an
    dem Ausgang des Exclusiv-Oder-Gliedes (31)
    der D-Ausgang eines mit der Taktimpulsfolge
    getakteten D-Flip-Flops (32) angeschlossen ist,
    dem ein mit der Rechteckimpulsfolge getaktetes weiteres D-Flip-Flop (33) nachgeschaltet
    ist, an dessen Q-Ausgang die Bitfolge (T) abnehmbar ist.

7.  Schaltungsanordnung nach Anspruch 4,
    dadurch gekennzeichnet,
    daß an einem Ausgang des 2-Bit-Schieberegisters (15) der D-Eingang eines mit der Rechteckimpulsfolge getakteten D-Flip-Flops (40)
    angeschlossen ist und daß am Q-Ausgang des
    D-Flip-Flops (40) die Bitfolge (T) abnehmbar ist
    (Fig. 3).

## Claims

1. Method for phase control in a demodulator for an input signal phase-modulated with a binary bit sequence, in which the bit spacing is equal to the period of the carrier oscillation, and a bit change is characterised by a 180-degree phase shift in the carrier oscillation, and in which the input signal is in each case sampled four times in a continuously repeating sampling cycle, the sampling time of each sampling cycle being controlled by means of a rectangular-pulse sequence, synchronised with the input signal, in such a manner that the samples are in each case phase-shifted with respect to one another by one quarter of the period of the input signal, characterised in that the first sample is located approximately at a zero position of the input signal, in that two successive even-numbered samples of all sampling cycles are in each case compared with one another,

   - in that, in the case of inequality of the comparison values, the intermediate odd-numbered sample is checked for parity with the comparison value in each case following or preceding in the sampling sequence, the results of the check are added or subtracted in accordance with their parity and from the sum a synchronising signal for the rectangular pulses is derived,
   - and in that, in the case of equality of the comparison values, their sampling cycle association is in each case determined and the rectangular-pulse sequence is phase-shifted by 180 degrees when the frequency of the association determination used to define the sampling cycle identity exceeds a predetermined value.

2. Method according to Claim 1, characterised in that, in order to recover the bit sequence, the even-numbered samples of each sampling cycle are continuously compared with the rectangular-pulse sequence with respect to its polarity and in each case one of the two results of the comparison is output as single bit of the bit sequence.

3. Method according to Claim 1, characterised in that the bit sequence is assembled from even-numbered samples which are in each case taken at the same taking interval from one of the successive sampling cycles.

4. Circuit arrangement for carrying out the method according to Claim 1, comprising a controllable frequency generator (10) which generates a rectangular-pulse sequence having a pulse repetition rate corresponding to the carrier frequency in the input signal and a clock pulse sequence, locked thereto in phase, having a clock rate corresponding to twice the pulse repetition rate, characterised in that a digitised input signal is present both at the input of a 2-bit shift register (15), clocked with the clock pulse sequence, having two parallel outputs, and at the input of a 1-bit shift register (18) clocked with the inverted clock pulse sequence, in that the two bit outputs of the 2-bit shift register (15) are connected to a first comparator (21) and a bit output of the 2-bit shift register (15) and the output of the 1-bit shift register (18) are connected to a second comparator (22), in that the output of the first comparator (12) is connected to a first and second counter (23, 24) in such a manner that an inequality signal characteristic of the inequality of the comparator input signals at the comparator output is supplied to the first counter (23) and an equality signal characteristic of the equality of the comparator input signals at the comparator output is supplied to the second counter (24), in that the two counters (23, 24) are constructed in such a manner that the respective output signal of the comparator (21) in each case increments or decrements the first counter (23) in dependence on the output signal of the second comparator (22) and in each case increments or decrements the second counter (24) in dependence on the instantaneous polarity of the rectangular-pulse sequence, in that the outputs of the two counters (23, 24) are connected to a synchronising circuit (25) which is connected to the control inputs of the frequency generator (10) and which generates from the output signals of the counters (23, 24) a time-limited control signal for synchronising the rectangular-pulse sequence with the input signal, in that the comparators are constructed as exclusive-OR gates (21, 22) and the counters (23, 24) are constructed as up/down counters (23, 24) clocked by the clock pulse sequence, in that the carry input (CI) of the second counter (24) is connected directly and that of the first counter 23 is connected via an inverter (30) to the output of the first exclusive-OR gate (21), in that the rectangular-pulse sequence is applied to the counting direction input (up/down) of the second counter (24) and that of the first counter (23) is connected to the output of the second exclusive-OR gate (22), and in that the first counter (23) exhibits an overflow inhibit element the overflow pulse of which resets the first counter (23) by a predeterminable part of its counting range, preferably by a quarter of its counting range.

5. Circuit arrangement according to Claim 4, characterised in that the input of a third comparator (31) is connected, on the one hand, to a bit output of the 2-bit shift register (15) and to which, on the other hand, the rectangular-pulse sequence is applied and in that the bit sequence can be picked up at the comparator output.

6. Circuit arrangement according to Claim 5, characterised in that the third comparator exhibits an exclusive-OR gate (31), the input of which is connected, on the one hand, to a bit output of the 2-bit shift register (15) and to which, on the other hand, the rectangular-pulse sequence is applied, in that the output of the exclusive-OR gate (31) is connected to the D output of a D-type flipflop (32) clocked with the clock pulse sequence, which is followed by a further D-type flipflop (33) clocked with the rectangular pulse sequence, at the Q output of which the bit sequence (T) can be picked up.

7. Circuit arrangement according to Claim 4, characterised in that at an output of the 2-bit shift register (15) the D input of a D-type flipflop (40) clocked with the rectangular-pulse sequence is connected, and in that the bit sequence (T) can be picked up at the Q output of the D-type flipflop (40) (Fig. 3).

**Revendications**

1. Procédé de régulation de phase dans un démodulateur recevant un signal d'entrée modulé en phase par une suite de bits binaire, dans lequel la trame des bits est égale à la période de l'oscillation porteuse et une variation de bit est caractérisée par un déphasage à 180° de l'oscillation porteuse, et selon lequel le signal d'entrée est détecté plusieurs fois, de manière répétée en continu dans chaque cycle de détection, l'instant de la détection de chaque cycle de détection étant réglé par une suite d'impulsions rectangulaires synchronisées sur le signal d'entrée, les grandeurs de détection étant déphasées chaque fois d'un quart de la période du signal d'entrée, procédé caractérisé en ce que :

 - la première grandeur de détection se situe sensiblement en position zéro du signal d'entrée et on compare deux grandeurs de détection d'ordre pair, successives, de tous les cycles de détection,

 - en cas d'inégalité des grandeurs comparées, on vérifie la parité de la grandeur de détection d'ordre impair, intermédiaire avec la grandeur de comparaison de la suite de détection qui est en amont ou en aval, et on additionne ou on soustrait les résultats des contrôles en fonction de la parité et on dérive de la somme un signal synchronisé pour les impulsions rectangulaires,
 - et en ce qu'en cas d'égalité des grandeurs de comparaison on détermine chaque fois leur appartenance au cycle de détection et on effectue un déphasage de 180° de la suite des impulsions rectangulaires si la fréquence des déterminations d'appartenance identifiant l'identité des cycles de détection dépasse une valeur prédéterminée.

2. Procédé selon la revendication 1, caractérisé en ce que pour récupérer la suite des bits on compare en continu la polarité des grandeurs de détection d'ordre pair de chaque cycle de détection avec la suite des impulsions rectangulaires et on émet comme bit séparé de la suite des bits chaque fois l'un des deux résultats de comparaison.

3. Procédé selon la revendication 1, caractérisé en ce que la suite des bits est composée de grandeurs de détection d'ordre pair qui sont chaque fois prises dans l'un des cycles de détection successifs suivant un même intervalle d'extraction.

4. Circuit pour la mise en oeuvre du procédé selon la revendication 1, comportant un générateur de fréquence (10), commandé, qui génère une suite d'impulsions rectangulaires dont la fréquence de la suite des impulsions correspond à la fréquence porteuse du signal d'entrée et une suite d'impulsions de cadence, bloquées en phase, avec une fréquence de cadence double de la fréquence de la suite des impulsions, circuit caractérisé en ce que :
le signal d'entrée numérisé est appliqué à la fois à l'entrée d'un registre à décalage à deux bits (15) commandé en cadence par la suite des impulsions de cadence avec deux sorties en parallèle ainsi qu'à l'entrée de l'un des registres à décalage à 1 bit, (18) commandés en cadence par l'inverse de la suite des impulsions de cadence, les deux sorties de bits du registre à décalage à 2 bits (15) étant reliées à un premier comparateur (21) et une sortie de bit du registre à décalage à 2 bits (15) et la sortie du registre à décalage à 2 bits (18) étant reliée à un second comparateur (22), et en ce que la sortie du premier comparateur (12) est reliée à un premier et à un second compteur (23, 24) de façon qu'un signal d'inégalité caractéristique de l'inégalité des signaux d'entrée du comparateur, disponible à la sortie du comparateur, soit appliqué au premier compteur (23) et qu'un signal d'égalité caractéristique de l'égalité des signaux d'entrée de comparateur, disponible à la sortie du comparateur, soit fourni au second compteur (24), en ce que les deux compteurs (23, 24) sont tels que le signal de sortie respectif du comparateur (21) incrémente ou décrémente le premier compteur (23) en fonction du signal de sortie du second comparateur (22) et le second compteur (24) en fonction de la polarité instantanée de la suite des impulsions rectangulaires, et en ce que la sortie des deux compteurs (23, 24) est reliée à un circuit de synchronisation (25) lui-même relié aux entrées de commande du générateur de fréquence (10), circuit de synchronisation qui génère à partir des signaux de sortie des compteurs (23, 24), un signal de commande limité dans le temps pour synchroniser la suite des impulsions rectangulaires avec le signal d'entrée, les comparateurs étant des porte OU-EXCLUSIF (21, 22), et les compteurs (23, 24) étant des compteurs/décompteurs (23, 24) commandés en cadence par la suite des impulsions de cadence,
en ce que l'entrée de report (CI) du second compteur (24) et celle du premier compteur (23) sont reliées par un inverseur (30) à la sortie de la première porte OU-EXCLUSIF (21), en ce que l'entrée de sens de comptage (comptage/décomptage) du second compteur (24) reçoit la suite des impulsions rectangulaires et l'entrée du premier compteur (23) est reliée à la sortie de la seconde porte OU-EXCLUSIF (22),
et en ce que le premier compteur (23) comporte une barrière de débordement dont l'impulsion de débordement remet en arrière le premier compteur (23) d'une partie prédéterminée de sa plage de comptage, de préférence d'un quart de sa plage de comptage.

5. Circuit selon la revendication 4, caractérisé par un troisième comparateur (31) dont l'entrée est, d'une part, reliée à une sortie de bits du registre à décalage à 2 bits (15) et qui reçoit par ailleurs la suite des impulsions rectangulaires, la sortie du comparateur fournissant la suite des bits.

6. Circuit selon la revendication 5, caractérisé en ce que le troisième comparateur est une porte OU-EXCLUSIF (31) dont l'entrée est reliée, d'une part, à une sortie de bits du registre à décalage à 2 bits (15) et, d'autre part, l'entrée reçoit la suite des impulsions rectangulaires, la sortie D d'un Flip-Flop D (32) commandé par la suite des impulsions de cadence étant reliée à la sortie de la porte OU-EXCLUSIF (31), ce Flip-Flop étant suivi par un autre Flip-Flop D commandé en cadence par la suite des impulsions rectangulaires et dont la sortie Q fournit la suite des bits (T).

7. Circuit selon la revendication 4, caractérisé en ce qu'une sortie du registre à décalage à 2 bits (15) est reliée à l'entrée (D) d'un Flip-Flop D (40) commandé par la suite des impulsions rectangulaires et en ce que la sortie Q du Flip-Flop D (40) fournit la suite de bits (T) (figure 3).

Fig.1

1,1875 kHz    2,375 kHz    4,75 kHz    57 kHz

% 2    % 2    (11) 12 (13)    57 kHz

EP 0 195 989 B1

Fig. 2

Fig. 3